(19) Europäisches Patentamt
European Patent Office
Office européen des brevets

(11) EP 2 026 485 A1

# (12) EUROPEAN PATENT APPLICATION

(43) Date of publication:
**18.02.2009 Bulletin 2009/08**

(51) Int Cl.:
***H04J 3/06*** *(2006.01)*

(21) Application number: **07016215.1**

(22) Date of filing: **17.08.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Nokia Siemens Networks Oy**
**02610 Espoo (FI)**

(72) Inventors:
- **Kroener, Hans, Dr.**
  **73312 Geislingen-Weiler (DE)**
- **Orkopoulos, Stawros**
  **89075 Ulm (DE)**

(74) Representative: **Bruglachner, Thomas E.**
**Nokia Siemens Networks GmbH & Co. KG**
**Patentabteilung**
**Postfach 80 17 60**
**81617 München (DE)**

## (54) Method and device for a packet based clock recovery

(57) The invention relates to a Method for synchronizing a master clock in a first radio network unit with a slave clock in a second radio network unit, wherein the first radio network unit is configured for sending data packets at predetermined time interval.

In order to provide a method for packet based clock recovery being able to achieve the desired accuracy within an acceptable time while avoiding a high computational complexity, it is proposed that the method further comprises the steps of:
- determining an estimate value for the transmission delay time for each data packet in a predetermined set of data packets,
- selecting at least one pair of data packets with a minimum estimate value for the transmission delay time,
- determining a difference of the reception times of said selected pair of data packets and
- performing a clock estimate procedure using the difference of the reception times of said selected pair of data packets in order to determine the quantity representative of the clock frequency difference and/or the clock time offset.

FIG 5

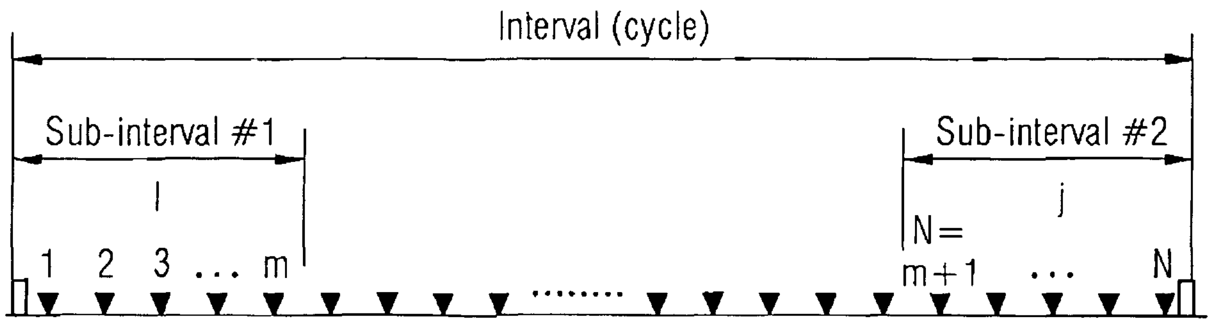


EP 2 026 485 A1

## Description

### 1. Technical Field of the Invention

The invention relates to a method and a device for packet based clock recovery in a communication system.

### 2. Background of the Invention

Clock and timing transmission is a basic functionality that is needed in any communication system. The importance of clock synchronization between a sending and a receiving unit is particularly obvious in the field of packet based data transmission, wherein a data stream is subdivided into packets and wherein the packets are transmitted over channels with varying properties and/or different paths, such that the transmission time between the sending unit and the receiving unit is randomly distributed. In order to synchronize the clocks in traditional circuit switched networks, such as PDH (Plesiochronuous Digital Hierarchy) or SDH (Synchronous Digital Hierarchy), a continuous bit stream is sent from the sender to the receiver. The receiver extracts the bit clock from the incoming bit stream and uses this clock for the outgoing transmissions.

However, there is a growing trend towards packet based communication networks such as IP or carrier/metro ethernet networks where each packet is sent with a relatively inaccurate clock and no transmission signal may be present between the packets or where the transmission signals between the packets relate to different data streams being transmitted in a time division multiplex scheme. On the other hand, there is still a need for an accurate clock recovery on the receiver side in some application scenarios.

One application scenario is a pseudo wire emulation (circuit emulation). This service is for example used for the transfer of SDH or PDH signals over a packet switched network. The sender side combines a number of bits from the incoming PDH/SDH line a packs those bits into a packet that is transferred over the packet based transmission network. On the receiver side, the original clock frequency has to be recovered to transmit the recovered PDH/SDH signal with the correct clock frequency.

Fig. 1 shows an example of this application scenario, wherein a sending unit 10 receives continuous data from a PDH/SDH network, organizes the incoming data in packets using pseudo wire emulation, transmits the packet in a packet based transmission network 12, which could be a Carrier Ethernet or IP network, and wherein the data packets are received by a receiving unit 14 which extracts the data from the data packets and reorganizes the data in a continuous or quasi-continuous data stream which can be forwarded in a PDH/SDH network.

A further scenario necessitating a precise clock and timing synchronization is the clock and timing recovery in a mobile base station. A base station needs a certain clock accuracy in order to operate the radio interface in a correct way. The radio frequency has to be kept quite accurate in order to avoid interference with other wireless communication systems and to have a good detection of the signal. Since the radio frequency is measured by comparing the radio frequency with a clock frequency of an internal clock, errors in the clock frequency will automatically result in errors in the measured and/or controlled radio frequency. For example, the frequency deviation of GSM/EDGE or UMTS/FDD system has been specified to a maximum value of $\pm$ 50 ppb. In addition, for some mobile communication systems, time synchronization among different base stations is needed, if, for example, time division duplex or time division multiplex operations are used or if radio access within different radio cells has to be coordinated.

Fig. 2 shows an example of this application scenario, where a clock 16 in a NodeB 18 of an UMTS network 20 has to be synchronized with the clock 22 of a radio network controller 24 of the network 20. The radio network controller 24 and the NodeB 18 communicate using a packet based transition protocol being based, e. g., on a Carrier Ethernet or IP network.

The relevant standardization like IEEE defines packet protocols describing the basic protocol for setting up and exchanging clock and timing relationships. The sender transfers timing packets in a regular way, e. g. periodically. Each timing/synchronization packet contains a time stamp that refers to the sending time as measured by the master clock or the sending time is implicitly known by the receiver since the inter-packet time distance is known and predefined.

Although various algorithms for generating the necessary clock information from the incoming packets are known, these algorithms do either suffer from working very slowly or from requiring a high computational complexity. One known example is generating a histogram of the reception times of the incoming packets, calculating the convex hull of the histogram or of corresponding probability distribution and deriving the necessary clock information from the parameters of the curve describing the convex hull. However, the fitting procedure used for generating the convex hull is a rather complex task requiring a large amount of computational power which may not be available in some receiving units.

Generally, methods for synchronizing clocks use a master clock generator providing timing packets that are sent to a receiving unit including a slave clock using a certain network. The master clock has a high accuracy which shall be transferred towards the slave clock unit. The slave clock unit has a local reference clock that has to be frequency aligned and time aligned to the master clock. In order to allow for a precise tuning of the slave clock, a slave clock reference clock is generated by an Oven Controlled Voltage Controlled Crystal Oscillator (OCVCXO) or Temperature Compensated Crystal Oscillator (TCXO).

Fig. 3 shows the basic setup of a communication system according to the invention. A master unit 26 including a master clock 28 uses the clock signal generated by the master clock 28 for generating timing packets in a timing packet generating unit 30. The timing or synchronization packets are transmitted to a slave unit 32 comprising the slave clock 34 being formed as an OCVCXO. On the slave clock side, the synchronization packets are detected and the time of the arrival of the packets is measured using the local reference clock being generated from the OCVCXO or a TCXO.

These measured arrival times are now provided to an algorithm being implemented in a clock error estimation unit 36, wherein the algorithm estimates the clock frequency error and/or the time offset between the master clock and the slave clock 34. Depending on the system, this algorithm performing the synchronization method may be also partly implemented on the master clock side, wherein in the latter case, synchronization response packets are retransmitted from the receiving unit 32 to the master unit 26.

In order to determine the basic clock frequency drift between the master clock 28 and the slave clock 34, a comparison between the measured reception times of successive synchronization packets is mode using the slave clock 34 and the time difference between the sending times of the respective synchronization packets. The time difference between the sending times of the synchronization packets may either be derived from the time stamps of the synchronization packets or it is predetermined and known.

However, the packet transfer delay within a transport network causes a relatively high estimation error for the frequency difference between the master and slave clock. The fluctuations in the packet transfer delay result in fluctuations in the thus measured frequency drift.

There are several clock recovery algorithms available which use different statistics to derive the required accuracy of the received package, e. g. average calculations, setup of timing windows for packet transfer, etc. All these algorithms require many synchronization packets in order to sufficiently average out the transfer delay jitter. Since the error becomes smaller with the root of the number of packets, it turns out that a vast number of packets is needed for achieving the required PPM accuracy. If, e. g. the timing delay jitter corresponds to 0.5 % of the inter-packet distance, $10^{10}$ packets are needed to synchronize the networks with the required accuracy. If the inter-packet distance is 1 sec, this corresponds to several tens of years. Another method would be to use two synchronization packets received at the beginning and the end of a measurement cycle and having a large timing difference of e. g. 100,000 sec, in order to reduce the error introduced by a 5 ms delay jitter in the individual packet reception times to an acceptable value. Both of the above examples show that unacceptable synchronization times are generated, since a base station should be operable within a few minutes after power switch on or reset.

Similar problems occur upon timing recovery using the sending of synchronization packets and the replying with synchronization response packets including the arrival time of the synchronization packets. The main source of errors in the timing recovery can be found in asymmetries between the channel used for sending the synchronization packets and the channel used for sending the synchronization response packets. Since the timing recovery algorithms assume symmetric transmission channels, any asymmetry will result in an error in the timing recovery, as the master unit does not know how the total time between sending the synchronization packet and receiving the synchronization response packet is distributed over the transmission times of both directions.

## 3. Summary of the Invention

One object of the invention is to provide a method for packet based clock recovery being able to achieve the desired accuracy within an acceptable time while avoiding a high computational complexity. The basic idea of the proposed algorithm is the fact that the frequency as well as the timing error can be minimized by taking only those synchronization packets and synchronization response packets into account that experience a relatively low delay between the master and slave units and vice versa. If only those packets that experience the lowest delay on their way to the packet network are used, the estimation error for frequency and time synchronization can be significantly improved.

The invention starts from a method for synchronizing a master clock in a first radio network unit with a slave clock in a second radio network unit, when the first radio network unit is configured for sending data packets at predetermined time intervals either continuously or upon request by the first radio network unit. The method comprises the steps of comparing and actual reception time of at least one incoming data packet with a scheduled reception time and deriving a quantity representative of at least a clock frequency difference between the master clock frequency and the slave clock frequency based on the result of the comparison. The quantity representative of the clock frequency difference may be the clock frequency difference itself measured in a suitable unit or e. g. a clock frequency ratio or any function thereof.

According to one aspect of the invention, it is proposed that the method further comprises the step of determining and estimate value for the transmission delay time for each data packet in a predetermined set of data packets and selecting at least one pair of data packets with a minimum estimate time for the transmission delay time. The minimum may be a minimum taken in a suitable subset of the data packets. It is proposed that the difference of the reception times of the selected pair of data packets is determined and used for deriving the quantity representative of the clock frequency difference. Since the distribution of transmission delay times of the data packets is truncated at zero or at some value corresponding to the signal runtime under zero-traffic conditions in the radio network, the width of the distribution of minimum runtimes taken from different samples is much smaller than the width of the distribution of runtimes of each sample. The basic idea of the invention is to use this fact for the improvement of the clock synchronization.

The proposed method allows for a more accurate estimation of clock frequency error between master and slave clock, which leads to a much faster frequency synchronization after startup and/or restart of the slave clock system.

Since the accuracy of the synchronization may be enhanced while reducing the time consumption of the synchronization, much lower requirements on the clock stability of the slave clock generator have to be imposed. This leads to a much more cost-efficient implementation, since a very costly Oven Controlled and Voltage Controlled Crystal Oscillator can be avoided for some applications and a much cheaper TCXO may be used.

Since the precision of the clock estimate depends strongly on the inter-packet distance between the packets in the selected pair of packets, it is further proposed that the data packets of said pair of data packets are selected from at least two subsets of data packets, wherein the subsets of data packets include data packets received in different time intervals being sufficiently spaced apart.

It is noted that selecting data packets with the minimum runtime may be fruitful in methods where the synchronization algorithm is implemented in the slave unit as well as in methods where the synchronization algorithm is mainly implemented in the master unit, since in the latter case, the packets with a minimum runtime in forward and in backward direction are typically less affected by asymmetries in the transmission channels than packets with longer runtimes.

According to a further aspect of the invention, it is proposed to remove data packets with maverick transmission array values in order to obtain a more trustworthy statistics.

## 4. Brief Description of the Drawings

The characterizing features of the invention and the advantages thereof will become more apparent from the following detailed description of the embodiments in combination with the attached drawings. The embodiments, the drawings and the claims relate to specific combinations of features. The skilled person will consider the features taken alone or in other suitable combinations being adapted to specific application scenarios without departing from the general idea of the invention as defined in the attached claims.

Fig. 1 show a pseudo wire emulation scenario using a packet based transmission;

Fig. 2 schematically shows an UMTS system comprising a master clock in a radio network controller and a slave clock in a NodeB;

Fig. 3 shows an overall system configuration of a packet based communication network including a master unit with a master clock and a slave unit with a slave clock;

Fig. 4 shows a timing scheme used for the clock synchronization;

Fig. 5 represents a synchronization cycle interval comprising two subintervals;

Fig. 6 is a logarithmic graph of an expected accuracy of the clock frequency synchronization method;

Fig. 7 illustrates the timing of a packet exchange used for a time synchronization between a master clock and a slave clock; and

Fig. 8 is a schematic flow diagram illustrating in more detail an embodiment of the invention.

## 5. Detailed description of the embodiments

The invention relates to a method for synchronizing a master clock in a first radio network unit, e. g. the master clock 22 in a radio network controller 24 as shown in Fig. 2, with a slave clock in a second radio network unit, e. g. a slave clock 16 in a NodeB 18 as illustrated in Fig. 2. The overall configuration of the network system is illustrated in Fig. 3 and has already been described in the previous section.

In order to achieve the synchronization, wherein the expression synchronization covers frequency alignment as well as the time synchronization (i. e. the elimination of a time shift between the master clock and the slave clock), a synchronization algorithm is implemented in the slave unit. As shown in Fig. 4, the master unit comprising the master clock periodically transmits synchronization packets being illustrated as arrows from left to right in Fig. 4 to the slave unit comprising the slave clock. The synchronization packets are sent at a certain rate, i. e. a time difference $T_b$ between the sending of two subsequent synchronization packets is constant. The time difference $T_b$ is measured by the master clock. The network adds a variable transport delay and the synchronization packets will arrive with a certain jitter at the slave clock side. The packet generation time of packet number i is denoted by $t_0^i$, whereas the arrival time at the slave clock is denoted by $t_1^i$ in Fig. 4.

In the embodiment of the synchronization method as described below, the reception times of N synchronization packets are measured. At the start of the synchronization procedure, the time difference $T_b$ between two synchronization packets will be calculated from the time difference between the arrival of the last packets N and the first packet 1 within the considered measurement cycle by calculating the difference between the reception time of the last packet N and the first packet 1 and dividing the difference by the number of intervals N - 1 between the reception times:

$$T_{b,est}=t_1^N-t_1^1 \div N-1$$

The estimated inter-packet time $T_{b,est}$ is a quantity representative of a clock frequency difference between the master clock frequency and the slave clock frequency, since, under ideal transmission conditions (zero jitter), any difference between $T_{b,est}$ and $T_b$ results from a difference between the master clock frequency and the slave clock frequency.

Based on the estimated inter-packet time $T_{b,est}$ , the delay jitter of each synchronization packet is estimated as

$$jitter_{i,est}=t_1^i-i\cdot T_{b,est}$$

for i = 1, 2, ... N

In the following step, the data packet number i with the minimum jitter from the subset of the first m data packets in the cycle interval and the data packet j with the minimum jitter from the subset of the last m data packets in the interval cycle are determined. The first m data packets and the last m data packets are comprised in respective subintervals of the interval cycle, wherein these subintervals are separated by a guard interval guaranteeing a high accuracy of the estimation. The data packets with the smallest delay jitter are the fastest data packets in the respective subintervals.

Assuming that the fastest packet of subinterval number 1 is at position i and has arrived at a time instant $t_1^i$ and the fastest packet of subinterval number 2 is at position j and has arrived at a time instant $t_1^j$, a new estimate for the time interval between the two successive packet arrivals can be calculated as

$$T_{b,est}=\frac{t_1^j-t_1^i}{(j-i)}\ .$$

This new estimate of $T_{b,est}$ will be used in a further iteration loop including the determination of new jitter values for the data packets within the first and second subintervals, determining the pair of data packets with the minimum jitter values and calculating the new estimate of $T_{b,est}$.

The iteration is repeated until the estimation of $T_{b,est}$ has converged and the ratio between the master and the slave clock frequency can be defined as the fraction of $T_b$ and $T_{b,est}$.

Finally, the slave clock frequency is adjusted by multiplying the old slave clock frequency with the latter fraction:

$$new\ slave\ clock\ frequency\ =\ old\ slave\ clock\ frequency\cdot\frac{T_b}{T_{b,est}}$$

The accuracy of the above described method can be estimated using simple combinatorial considerations and depends on the length N of the interval cycle and the length n of the subintervals shown in Fig. 5. Since the probability of finding a real fast data packet in the subintervals increases with the length m of the subintervals, whereas the typical time difference between the selected pair of data packets with a minimum transmission delay time depends on the guard interval between the two subintervals, it is clear that the number m has to be chosen large enough to capture a fast data packet with a high probability on the one hand and has to chosen much smaller than N on the other hand. As a consequence, for each value of N, there is an optimal value of n.

Fig. 6 shows an expected accuracy for the example N = 10,000 ppc, a mean jitter of 10 ms and a time distance of the synchronization packets of 10 ms. The optimum subinterval size corresponds to approximately 4,000 packets.

The minimum of the curve represented in Fig. 6 can be determined as

$$\text{Subinterval size} = floor(0{,}3975 \cdot N + 0{,}25)$$

for arbitrary N.

Fig. 7 illustrates the basic principle of a time synchronization or elimination of time differences between the master clock and the slave clock. For time synchronization, it is also beneficial to choose those packets that have the smallest transfer delay on their way from the master to slave clock and vice versa. The synchronization packet as well as the synchronization response packet must not necessarily be from the same cycle. The algorithm may be applied independently in forward and reverse direction. The time values for the packets will be used to derive the time offset between the master clock and the slave clock. Assuming that packet i is the fastest packet in the forward direction and packet j is the fastest packet in the backward direction, the time offset between master and slave clock can be calculated as

$$clock\ time\ offset\ estimate = \frac{(T_1^i - T_0^i) - (T_3^j - T_2^j)}{2}$$

This is illustrated in Fig. 7, wherein the fastest packet in the forward network path and the fastest packet in the reverse network path are illustrated with dashed arrows. It is noted that this simple scheme works only if the clock frequencies of the master clock and the slave clock are perfectly aligned, e. g. using the method described above. This is due to the fact that any clock frequency difference will lead to an additional error due to the clock drifts that are observed between the considered synchronization packet i and the synchronization response packet j.

In the general situation, where the frequency and the time offset correction have to be performed simultaneously, in the first step the clock difference between the master clock and the slave clock have to be estimated as described above. This calculation provides an estimation of the clock frequency ratio of the master and the slave clock. Therefore, the time stamps of the master clock and the slave clock used in the above equation for determining the clock time offset estimate have to be adjusted to a common time base. In order to do so, the times $t_1^i$ and $t_2^j$ have to be rescaled by the estimated clock frequency ratio. Therefore, in the general case, the clock time offset estimate can be calculated as:

$$clock\ time\ offset\ estimatate = \frac{(t_1^i \cdot clock\ ratio\ estimate - t_0^i) - (t_3^j - t_2^j \cdot clock\ ratio)}{2}$$

According to further embodiments of the invention, the time distance $T_b$ between successive synchronization packets may be adjusted depending on the characteristics of the packet network. The time distance $T_b$ may, for example, be reduced when the network introduces only a small delay jitter. This provides the fastest synchronization of the slave clock. In general, the time distance $T_b$ can be chosen as a multiple of the average value of the delay jitter.

Moreover, the time distance $T_b$ between successive synchronization packets can be adjusted depending on the synchronization status of the slave clock. When the slave clock has just started and needs to be resynchronized, a small time distance $T_b$ can be chosen, whereas a larger $T_b$ can be chosen when a good synchronization stability has been achieved.

According to further embodiments of the invention, it is proposed to use an irregular time spacing between the synchronization patterns in order to avoid an interference between the packet generation frequency and existing network clocks. For example, it is possible to use a pseudo random sequence to vary the time spacing between the successive synchronization packets, wherein the pseudo random sequence may be generated simultaneously in the master unit and in the slave unit. If the pseudo sequence is not known by the receiver, the synchronization packets may have a time stamp, such that the slave unit may derive the pseudo random sequence used from the successive values of the time stamp.

Moreover, an even improved measurement accuracy may be achieved by combining several measurement cycles into a bigger measurement cycle. I. e. a number of N* measurement cycles could be combined in a so called super-measurement cycle. Only the packet with the smallest delay jitter within a measurement cycle will be taken into account within the super measurement cycle. All operations and iterations described above can now be performed in the same way as already described. If a frequency correction is done after each measurement cycle, the different arrivals of the synchronization packets have to be rescaled to a common time clock (common time scale).

According to further aspects of the invention, it is proposed to use additional filtering of the clock ratio estimate and the clock time offset estimate to avoid oscillations.

The estimate of the clock frequency ratios or the time shift between the master clock and the slave clock in successive intervals may be improved by comparing the results of successive cycle intervals and by adjusting the length N of the cycle intervals and/or the corresponding packet rate in a proper way if large fluctuations in the results of different error estimation cycles are assessed.

Fig. 8 shows a flow diagram of the clock synchronization method according to a further embodiment of the invention. In an initialization step 38, the parameters such as the cycle length N, the subinterval size m depending on N, maximum and minimum parameters for various variables are defined and a number N of synchronization packets are received. Moreover, a first estimate value for the clock frequency ratio $T_{b,est}$ is set either depending on the total time needed for receiving the N synchronization packets, if no estimate value from earlier cycles is available or by using the value derived in the previous synchronization cycle.

The initialization step 38 is followed by an implementation using two nested loops, an outer loop for removing the fastest pairs of packets and an inner loop for the optimization of the $T_{b,est}$ value. The outer loop is depicted mainly on the left-hand side of Fig. 8, whereas the inner loop is depicted on the right-hand side of Fig. 8. In a decision step 39, the system checks whether or not a predefined maximum number of removed fastest pairs of packets has not been reached. If the maximum number of removed pairs of packets has been reached ("yes"), it is checked whether a predefined maximum number of iterations is reached in a step 40. In an initialization step 41 for the inner loop, the iteration counter is increased and, if the system is not in the first iteration, the value $T_{b,est}$ from earlier iterations is substituted. Moreover, memory for storing the fastest packets is allocated. In an estimated clock error calculation procedure 42, the jitter values are calculated depending on the packet reception times and on the estimate value $T_{b,est}$ for all synchronization packets within the two subintervals. Afterwards, the packets with the lowest jitter out of the first and the second subinterval are derived by searching the minimum jitter value. Using the time difference between the reception times of the packets with the minimum jitter value, a clock estimate is calculated.

The calculated clock estimate is used to calculate the clock error for the current cycle. Finally, the system jumps back to the decision step 40, where the maximum number of iterations and the convergence of the inner loop optimization procedure are checked. The convergence is denied, if a new pair of fastest packets has been derived.

The inner loop optimization procedure corresponds to the procedure as described with reference to Figs. 4 - 6, such that we refer to the corresponding description for further details in order to avoid repetitions. If the maximum number of iterations has been reached or the inner loop optimization procedure has converged, the thus determined pair of fastest synchronization packets is removed from the data in a step 43 and the density of data points within a 10 $\mu$s are counted. If the density of data points in a time interval of 10 $\mu$s starting from the reception time of the fastest pair of packets is below a predefined value, the data points have to be classified as mavericks and a new outer loop must be executed. Otherwise, the outer loop procedure can be finished.

The outer loop procedure will be executed as long as the maximum number of removed packets within a 10 $\mu$s range has not been reached and the maximum number of removed fastest pairs of packets has not been reached. The maximum number of removed packets within a 10 $\mu$s range is preferably set to a value $\geq 10$. The removed pairs of fastest packets are stored in a pair of vectors.

Once the outer loop has been finished, the system jumps from a decision step 44 to a linear regression calculation and clock estimate step 45, wherein a linear regression based on the pair of vectors storing the removed pairs of fastest packets is calculated. For the linear regressions, the X-axis positions are given by the components of the vectors and the Y-axis uses the clock of arrival values. The outcome of the linear regression is a result containing two coefficients, i. e.

$$y = p(1) \cdot x + p(2)$$

From the coefficients resulting from the linear regression, the clock estimate and clock error may be calculated as

$$clock\ estimate = p(1)$$

and

$$clock\ error = -(p(1) - T_o) \div T_o$$

The above method basically uses a subset of pairs of packets for the clock estimate and the clock error, wherein the pairs of packets are selected such that the time distance between the packets within a pair is relatively large due to the guard interval between the first and the second subinterval one the one hand and wherein the packets are selected such that only packets which have run to the network in a relatively short time are taken into account. Moreover, since the iteration procedure is continued until a certain density of data points is reached, the influence of mavericks is eliminated or at least minimized, since statistical relevance of the selected data points can be guaranteed by the density.

## Claims

1. Method for synchronizing a master clock in a first radio network unit with a slave clock in a second radio network unit, wherein the first radio network unit is configured for sending data packets at predetermined time intervals, said method comprising the steps of:

   - comparing an actual reception time of at least one incoming data packet with a scheduled reception time and
   - deriving a quantity representative of a clock frequency difference and/or the clock time offset between the master clock and the slave clock based on a result of said comparison,

   **characterized by**
   further comprising a steps of:
   - determining an estimate value for the transmission delay time for each data packet in a predetermined set of data packets,
   - selecting at least one pair of data packets with a minimum estimate value for the transmission delay time,
   - determining a difference of the reception times of said selected pair of data packets and
   - performing a clock estimate procedure using the difference of the reception times of said selected pair of data packets in order to determine the quantity representative of the clock frequency difference and/or the clock time offset.

2. Method according to claim 1, **characterized in that** data packets of said pair of data packets are selected from at least two subsets of data packets out of the set of data packets, wherein said subsets of data packets include data packets received in different time intervals, the time intervals being separated by a guard interval.

3. Method according to claim 2, **characterized by** further comprising the step of determining the size of the at least two subsets of data packets depending on the number of data packets within said predetermined set of data packets.

4. Method according to one of the preceding claims, **characterized in that** said steps of determining estimate values for the transmission delay times, selecting at least one pair of data packets, determining a difference of the reception times and performing a clock estimate are repeated in an iteration loop, wherein the results of the clock estimate is used in the step of determining estimate values for the transmission delay times.

5. Method according to claim 4, **characterized in that** the iteration loop is interrupted if the same pair of data packets has been selected in two subsequent iterations.

6. Method according to one of the preceding claims, **characterized in that** the selected pair of data packets with a minimum estimate value for the transmission delay time is removed and stored in a collection of selected pairs of data packets, wherein the steps of selecting and removing a pair of data packets is repeated until the collection of selected pairs of data packets contains a sufficient data basis.

7. Method according to claim 6, **characterized in that** the repetition of the steps of selecting and removing a pair of data packets is stopped if the density of data points in the collection of selected pairs of data packets in a predetermined time interval exceeds a predetermined threshold value.

8. Method according to one of claims 6 and 7, **characterized in that** the parameters for the synchronization of clocks are determined statistically from said collection of selected pairs of data packets.

9. Method according to claim 8, **characterized in that** said collection of selected pairs of data packets is used to calculate a linear regression based on the data points comprised in the selected pairs, wherein a clock estimate and a clock error are calculated from the coefficients of the linear regression.

10. Method according to at least one of the preceding claims, **characterized in that** the number of data packets in the predetermined set of data packets and/or the time distance between successive data packets is determined depending on at least the characteristics of the packet network and/or the synchronization status of the slave clock.

11. Method according to at least one of the preceding claims, **characterized in that** the time intervals for sending the data packets are determined depending on a pseudo random sequence.

12. Method according to at least one of the preceding claims, **characterized in that** the values of said quantity representative of the clock frequency difference and/or the clock time offset resulting from subsequent clock estimate procedures are subjected to a filtering procedure.

13. Network system comprising a first radio network with a master clock and a second radio network unit with a slave clock in, wherein the first radio network unit is configured for sending data packets at predetermined time intervals, the network system further comprising a clock synchronization means for comparing an actual reception time of at least one incoming data packet with a scheduled reception time and deriving a quantity representative of a clock frequency difference and/or the clock time offset between the master clock and the slave clock based on a result of said comparison,
**characterized in that**
the network system further comprises:

- means for determining an estimate value for the transmission delay time for each data packet in a predetermined set of data packets,
- means for selecting at least one pair of data packets with a minimum estimate value for the transmission delay time,
- means for determining a difference of the reception times of said selected pair of data packets and
- means for performing a clock estimate procedure using the difference of the reception times of said selected pair of data packets in order to determine the quantity representative of the clock frequency difference and/or the clock time offset.

FIG 1

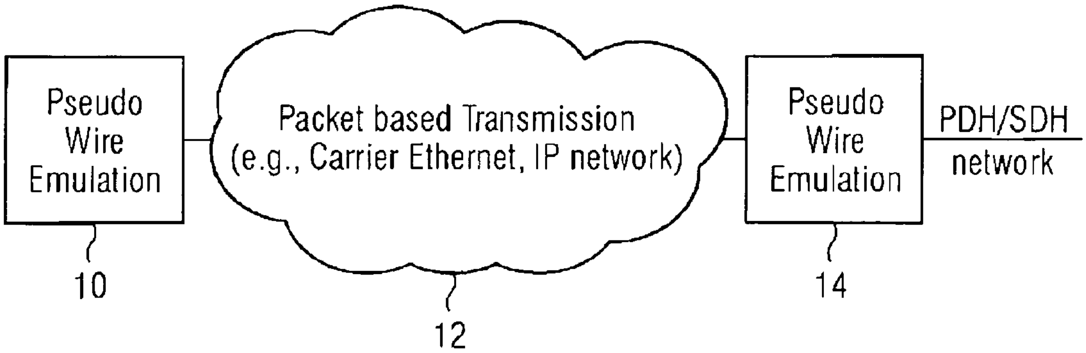


FIG 2

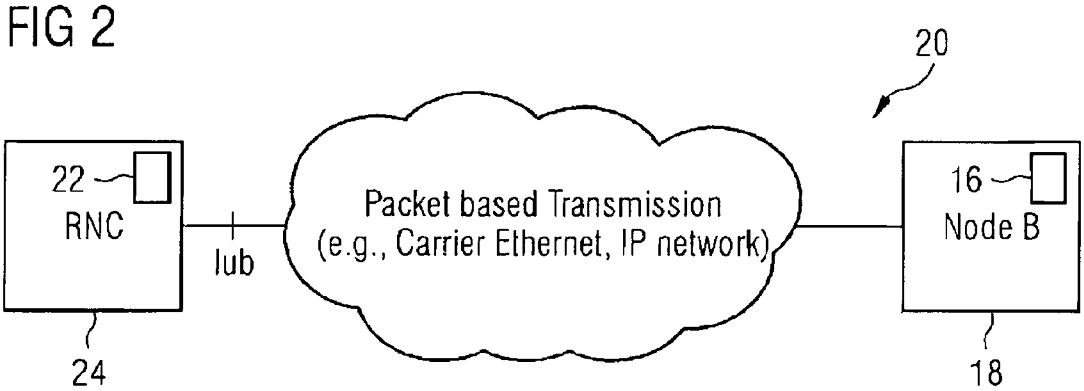


FIG 3

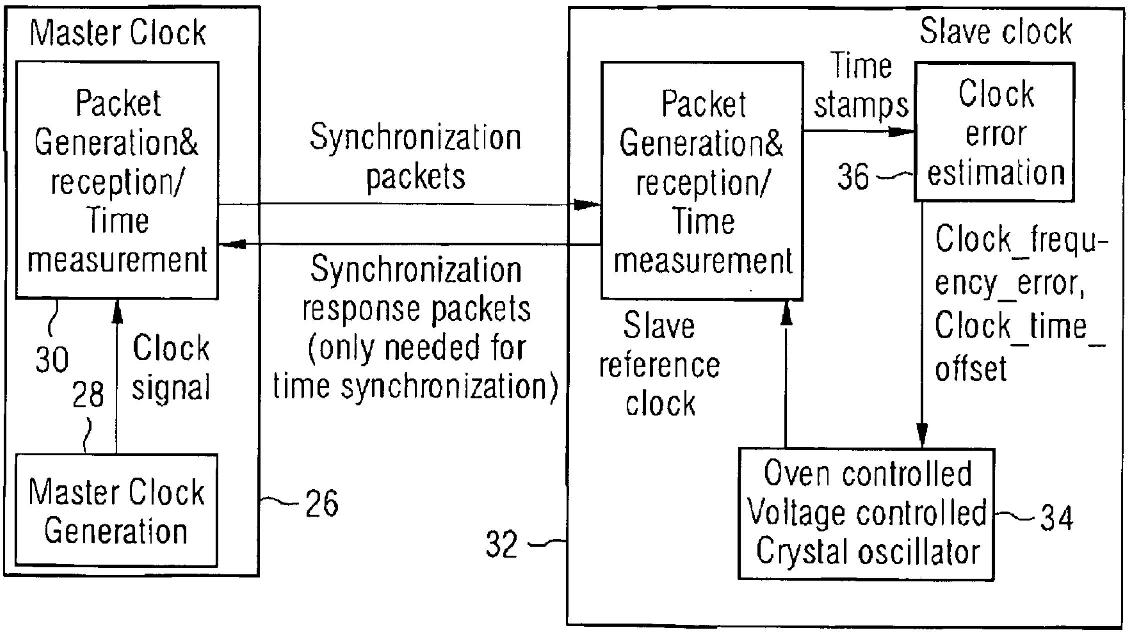

FIG 4

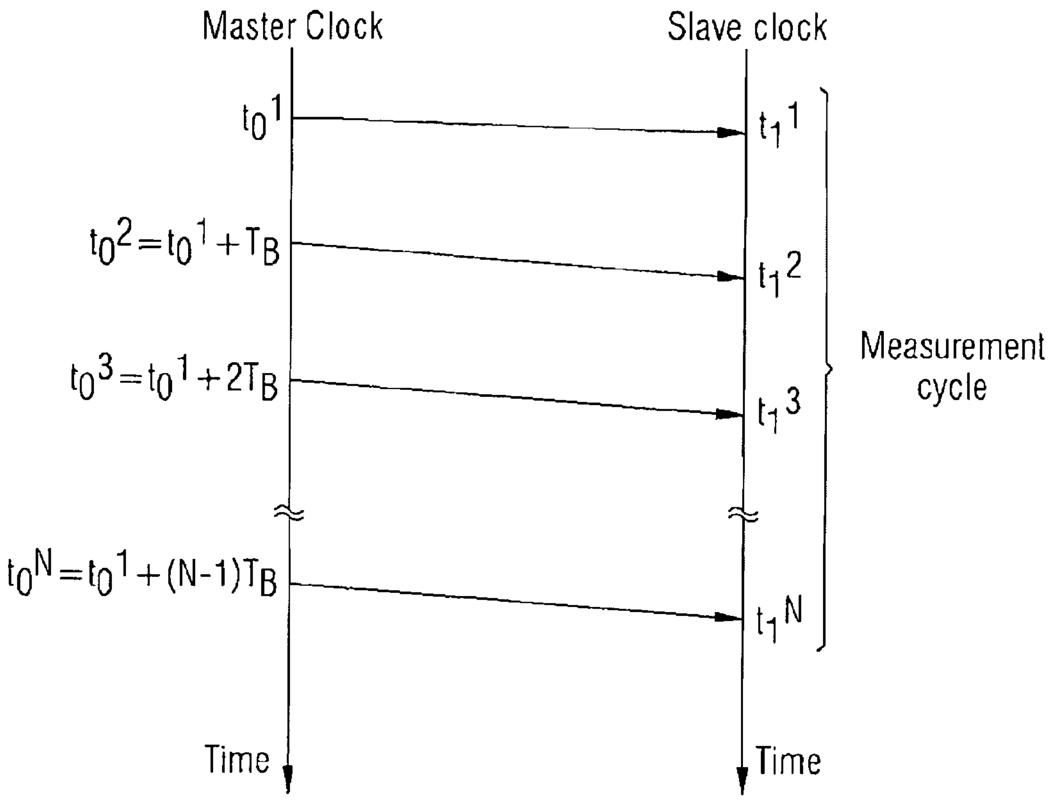
Master Clock
Slave clock
$t_0{}^1$
$t_0{}^2 = t_0{}^1 + T_B$
$t_0{}^3 = t_0{}^1 + 2T_B$
$t_0{}^N = t_0{}^1 + (N-1)T_B$
$t_1{}^1$
$t_1{}^2$
$t_1{}^3$
$t_1{}^N$
Measurement cycle
Time
Time

FIG 5

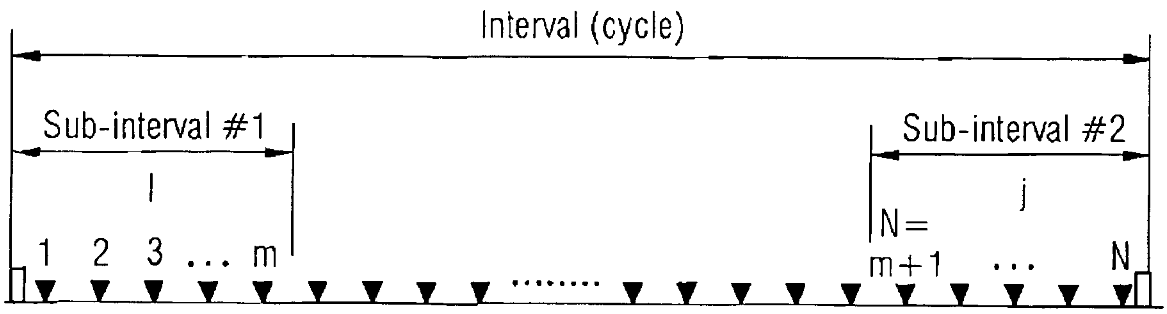
Interval (cycle)
Sub-interval #1
i
Sub-interval #2
j
1 2 3 ... m
N= m+1 ... N

FIG 6

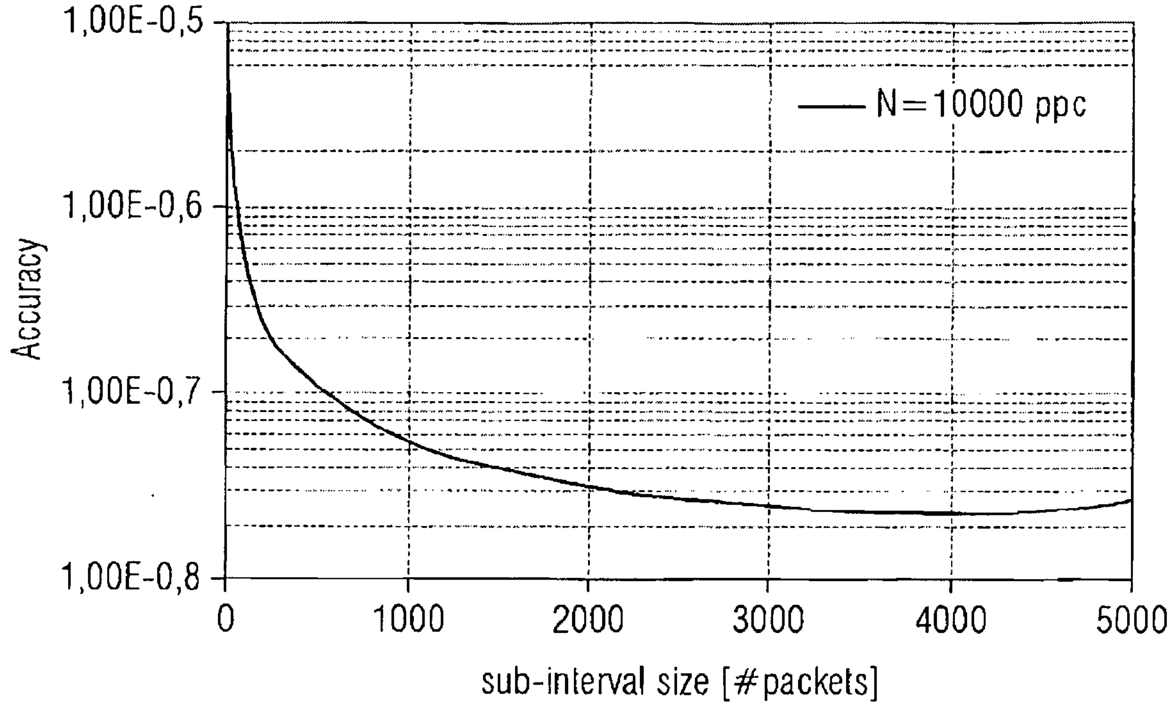
1,00E-0,5
1,00E-0,6
1,00E-0,7
1,00E-0,8
Accuracy
N=10000 ppc
0
1000
2000
3000
4000
5000
sub-interval size [#packets]

FIG 7

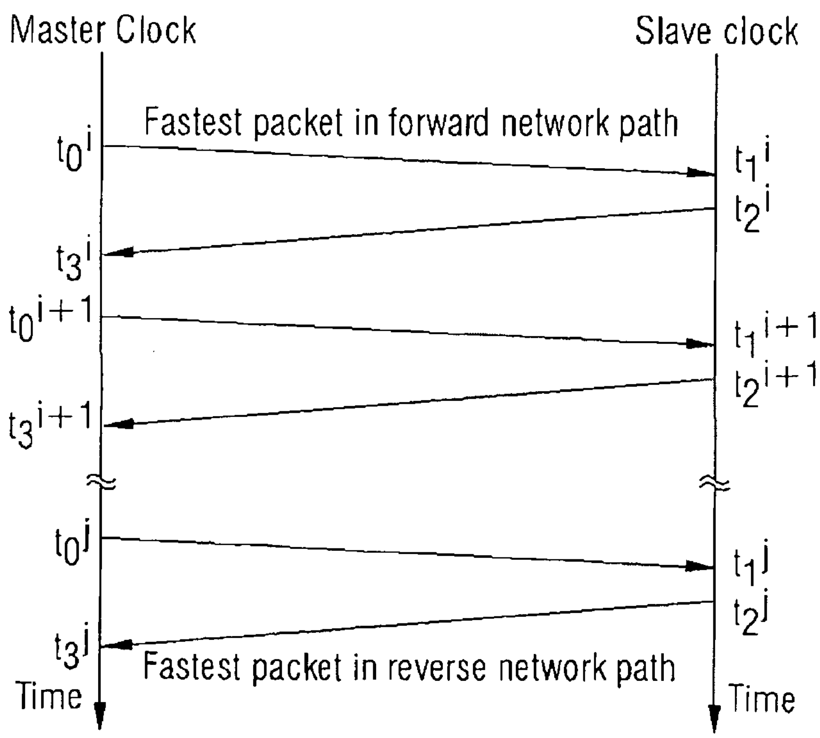
Master Clock
Slave clock
Fastest packet in forward network path
$t_0^i$
$t_1^i$
$t_2^i$
$t_3^i$
$t_0^{i+1}$
$t_1^{i+1}$
$t_2^{i+1}$
$t_3^{i+1}$
$t_0^j$
$t_1^j$
$t_2^j$
$t_3^j$
Fastest packet in reverse network path
Time
Time

FIG 8

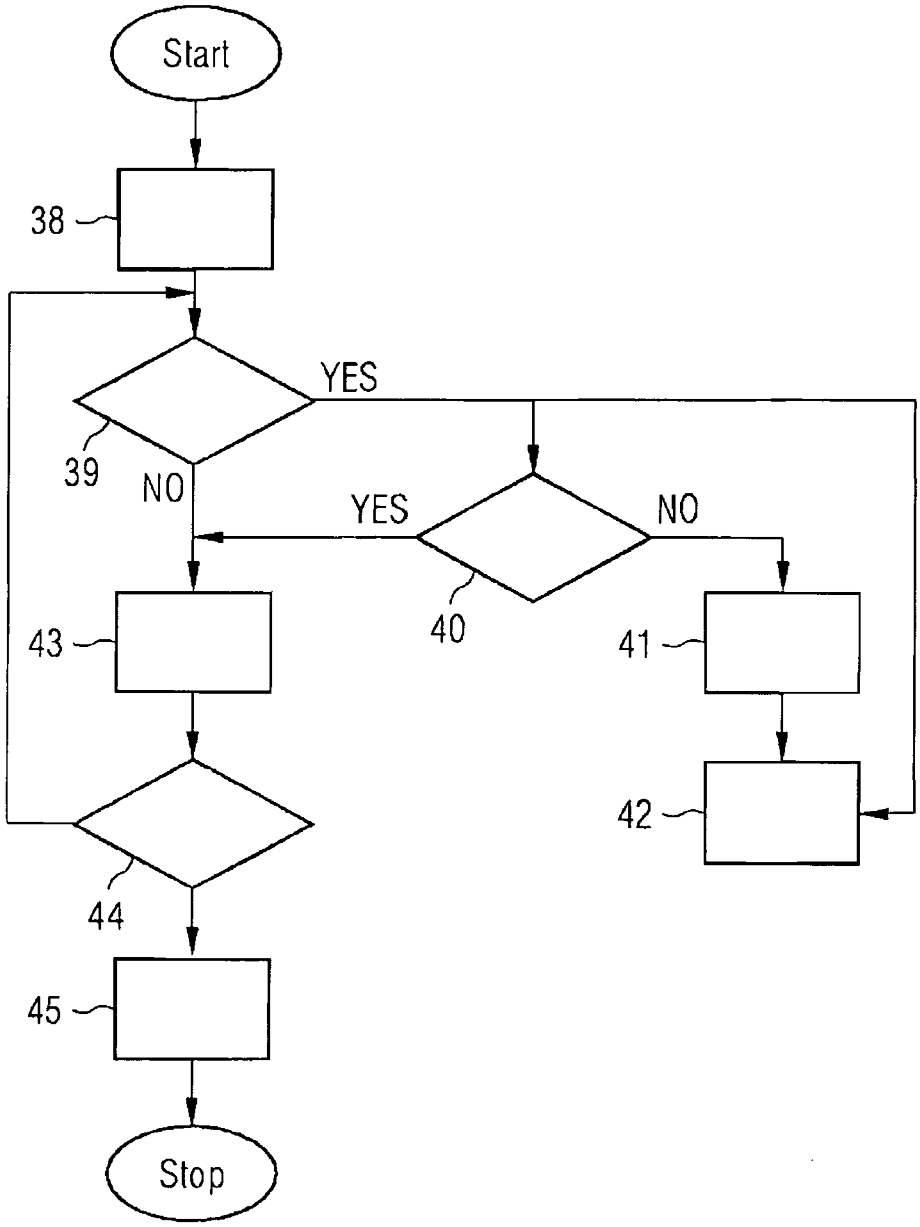

Europäisches Patentamt
European Patent Office
Office européen des brevets

# EUROPEAN SEARCH REPORT

Application Number
EP 07 01 6215

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 819 685 B1 (ABOUCHAKRA RABIH [FR] ET AL) 16 November 2004 (2004-11-16)<br>* abstract *<br>* figures 2-4 *<br>* column 2 - column 7 *<br>----- | 1-13 | INV.<br>H04J3/06 |
| X | WO 2005/020486 A1 (ERICSSON TELEFON AB L M [SE]) 3 March 2005 (2005-03-03)<br>* abstract *<br>* figures 5, 7-13 *<br>* page 4 - page 6 *<br>* page 8 - page 19 *<br>----- | 1-13 | |
| A | EP 1 455 473 A2 (ZARLINK SEMICONDUCTOR LTD [GB]) 8 September 2004 (2004-09-08)<br>* abstract *<br>* figures 1-5 *<br>* paragraph [0020] - paragraph [0038] *<br>----- | 1-13 | TECHNICAL FIELDS SEARCHED (IPC)<br>H04J |

The present search report has been drawn up for all claims

| Place of search | Date of completion of the search | Examiner |
|---|---|---|
| Munich | 26 November 2008 | Moser, Jochen |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 07 01 6215

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2008

| Patent document cited in search report | Publication date | Patent family member(s) | Publication date |
|---|---|---|---|
| US 6819685 B1 | 16-11-2004 | AT 303022 T | 15-09-2005 |
| | | DE 69926857 D1 | 29-09-2005 |
| | | DE 69926857 T2 | 08-06-2006 |
| | | EP 1006686 A1 | 07-06-2000 |
| | | FR 2786964 A1 | 09-06-2000 |
| | | JP 2000174821 A | 23-06-2000 |
| WO 2005020486 A1 | 03-03-2005 | CN 1839573 A | 27-09-2006 |
| | | EP 1656754 A1 | 17-05-2006 |
| | | US 2005041692 A1 | 24-02-2005 |
| EP 1455473 A2 | 08-09-2004 | CN 1551556 A | 01-12-2004 |
| | | GB 2399263 A | 08-09-2004 |
| | | JP 3960385 B2 | 15-08-2007 |
| | | JP 2004274766 A | 30-09-2004 |
| | | KR 20040081033 A | 20-09-2004 |
| | | KR 20070055451 A | 30-05-2007 |
| | | US 2008212619 A1 | 04-09-2008 |
| | | US 2004258099 A1 | 23-12-2004 |

EPO FORM P0459

For more details about this annex : see Official Journal of the European Patent Office, No. 12/82